# EUROPEAN PATENT APPLICATION

(11) **EP 1 764 893 A2**
(43) Date of publication of application: **21.03.2007**
(21) Application number: 06017106.3
(22) Date of filing: 17.08.2006
(51) Int. Cl.: H02H 9/04, H02H 9/06, H02H 9/00

(54) **Power supply system with lightning protection**

(30) Priority: 26.08.2005 CN 200510029150
(71) Applicant: Alcatel, 75008 Paris (FR)
(72) Inventor: Fu, Dengmeng, 201206 Shanghai (CN); Zou, Yang, 201206 Shanghai (CN); JunKui, Pan, c/o Alcatel Shanghai Bell Co., Ltd., 201206 Shanghai (CN); Yao, Ninggang, 201206 Shanghai (CN)
(74) Representative: Schäfer, Wolfgang

(57) **Abstract**

An outdoor lightning protection power supply system comprises an AC distribution plant (6), an AC/DC rectifier (2) and a backup battery (4), wherein a lightning protection system, a main earthing bar (12) as well as a filter (11) for absorbing AC load conducted interference is provided at the input terminal of the AC distribution plant, and there is provided an electrical box (1) for accommodating them. Take the system lightning protection, the system earthing and the system filtering, as well as the system power supply into consolidated consideration, the present invention not only has the advantage of small volume and integration convenience, but also improves the reliability of the power supply system. Since the integration of the system is significantly improved, the number of the lightning protection module can be reduced, whereby reducing the system cost and saving the available space of the outdoor communication cabinet. The invention can achieve the lightning protection of IEC61643-1 class I+II level in a small volume, the rated discharge current of which is up to 50KA (10/350us), and the protective voltage level Up is less than 1.5KV, thus is suitable for geography weather type of a majority of areas in China, and can be applied to outdoor tele-communication apparatus, or substitute the existing power supply modules directly and upgrade to the lightning protective characteristic immediately.

## Description

### Technical Field

The invention relates to an outdoor power supply system. More specifically, the invention relates to an outdoor lightning protection power supply system.

### Background of the Invention

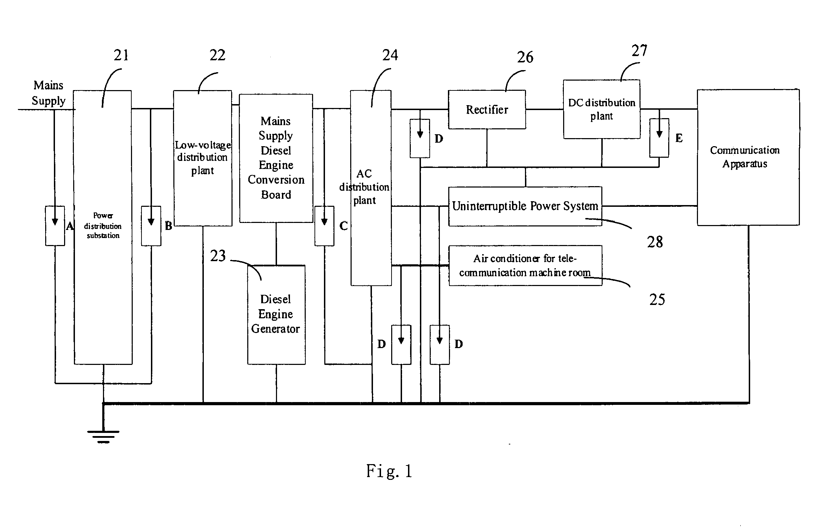

As shown in Fig. 1, a traditional indoor lightning protection tele-communication power supply system comprises power distribution substation 21, low-voltage distribution plant 22, diesel engine generator 23, AC distribution plant 24, air conditioner for tele-communication machine room 25, AC/DC rectifier 26, DC distribution plant 27, uninterruptible power system and the like. The concept of lightning protection for this system is to add the multistage lightning arresters A, B, C, D and E for each apparatus that might introduce lightning hazard, so as to absorb lightning current, reduce the residual voltage of the system gradually and protect the back end tele-communication apparatus. It has the following defects: first, the system cost of the multistage lightning arrester design is quite high; second, the plurality of lightning arresters require large installation space; third, in the multistage lightning arrester design, the cooperation of the previous lightning arrester and the subsequent lightning arrester should be ensured by the conductor distance long enough, and it is necessary to take the cooperation between the two adjacent stages of lightning arresters and among the whole system into careful account, which makes the design difficult; fourth, only focusing on lightning protection design and not taking the earthing - and electromagnetic interference into consideration makes the system integration level low and reduces the reliability.

Since the metropolitan tele-communication network goes saturated and the telephone market in the country has a huge potential, the outdoor tele-communication apparatus are popularized on a large scale. Meanwhile, the outdoor tele-communication power supply as the basis of the outdoor tele-communication apparatuses is drawing more attention of the skilled in the art.

In view of the disadvantages of the outdoor communication apparatuses, such as the poorness of the operating environment, the vulnerability to lightning and the limited apparatus space, the indoor lightning protection tele-communication power supply described above is not able to satisfy the requirements at all. Thus, there is a continuous need for a low cost, high reliable lightning protection solution for outdoor power supply systems.

### Summary of the Invention

An object of the invention is to provide an outdoor lightning protection power supply system that not only reduces the system cost and installation space, but also improves the system integration level and reliability, so as to ensure the proper operation of the tele-communication apparatus, while protecting the tele-communication apparatus installed outdoors against the lightning.

The invention provides an outdoor lightning protection power supply system connected between the mains power supply and the tele-communication apparatus, comprising an AC distribution plant, an AC/DC rectifier and a backup battery, wherein a lightning protection system and a main earthing bar connected with the lightning protection system are disposed at the input terminal of the AC distribution.

In the above outdoor lightning protection power supply system, there provided a filter connected with the lightning protection system and the main earthing bar respectively, which is used to absorb the conducted interference of the AC load.

In the above outdoor lightning protection power supply system, there is also provided an electrical box for accommodating the lightning protection system and the main earthing bar, or for accommodating the lightning protection system, the main earthing bar and the filter.

In the above outdoor lightning protection power supply system, the lightning protection system utilizes a lightning protection mode with large discharge capacity and low residual voltage composed of a number of lightning protection modules.

In the above outdoor lightning protection power supply system, the lightning protection system comprises three lightning protection module, wherein the first and the second lightning protection module (A1 and A2) are connected in parallel between the phase line and the neutral line of the single-phase power supply, and the third lightning protection module is connected in parallel between theneutral line and the safety ground of the single-phase power supply.

In the above outdoor lightning protection power supply system, the lightning protection level of the first and the second lightning protection module(A1 and A2) are level I and level II respectively, which forms the level I + II lightning protection of the above described lightning protection system.

In the above outdoor lightning protection power supply system, the level I lightning protection utilizes lightning protection modules with Transient Absorbtion Technology.

In the above outdoor lightning protection power supply system, two circuit breakers (F1, F2) are further connected to the phase line and the neutral line of single-phase power supply at the front end of the lightning protection system. The circuit breaker (F1, F2) can be disposed within the electrical box.

In the above outdoor lightning protection power supply system, an AC safety ground and a DC earthing are connected in the AC/DC rectifier.

In the above outdoor lightning protection power supply system, the electrical box is an electrical box with electromagnetic shielding function.

In the above outdoor lightning protection power supply system, the first and the third lightning protection module (A1 and A3) are lightning protection modules of the voltage switching type, and the second lightning protection module (A2) is lightning protection module of the voltage limiting type.

With the above mentioned technical solution, taking the system lightning protection, the system earthing, the system filtering and the system power supply into consolidated consideration, the invention has not only the advantage of small volume and integration convenience, but also enhances the reliability of the tele-communication power supply. Since the integration of the system is significantly improved, the number of the lightning protection module can be reduced, whereby reducing the system cost and saving the available space of the outdoor tele-communication cabinet. The invention can achieve the lightning protection of IEC61643-1 class I + II level in a small volume, the rated discharge current of which is up to 50KA (10/350us), and the protective voltage level Up is less than 1.5KV. Thus, the invention is suitable for geography weather type of a majority of areas in China, and can be applied to outdoor tele-communication apparatus, or substitute the existing power supply modules directly and upgrade to the lightning protective characteristic immediately.

### Brief Description of The Drawings

Fig.1 is the illustration of the lightning protection architecture of a traditional indoor power supply system;
Fig.2 is the illustration of the structure of the outdoor lightning protection power supply system according to the first embodiment of the invention;
Fig.3 is the illustration of the structure of the outdoor lightning protection power supply system according to the second embodiment of the invention.

### Detailed Description of The Preferred Embodiments

The First Embodiment

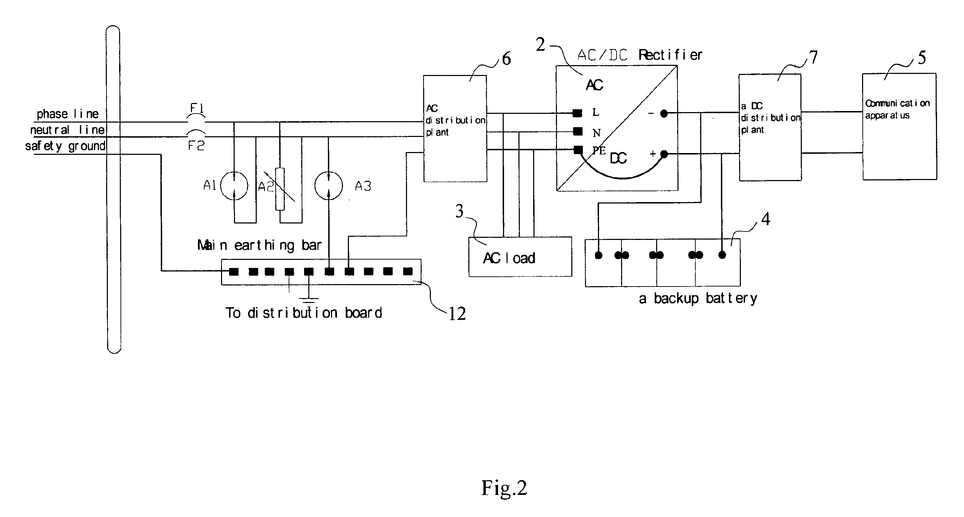

As shown in Fig.2, the outdoor lightning protection tele-communication power supply according to the invention includes an AC distribution plant 6, an AC/DC rectifier 2, a backup battery 4 and a DC distribution 7, wherein an AC safety ground and a DC earthing are connected in the AC/DC rectifier to achieve a two-line system, thereby reducing the system cost. The invention is characterized in comprising a lightning protection system and a main earthing bar 12. The lightning protection system utilizes a lightning protection mode with large discharge capacity and low residual voltage composed of three, i.e. the first, the second and the third lightning protection modules (A1, A2 and A3), wherein A1 and A3 are the lightning protection modules of the voltage switching type, and A2 is the lightning protection module of the voltage limiting type.

The three lightning protection modules are connected to a single-phase powersupply respectively, wherein the first and the second lightning protection modules (A1 and A2) are connected in parallel between the phase line and the neutral line, and the third lightning protection module (A3) is connected in parallel between the neutral line and the safety ground of the single-phase power supply.

The lightning protection level of the first and the second lightning protection modules (A1 and A2) are level I and level II respectively, which forms the level I + II lightning protection of the lightning protection system. The level I lightning protection can employ the Lightning protection module with Transient Absorbtion Technology.

Two circuit breakers (F1 and F2) are connected to the phase and the neutral line of the single-phase power supply at the front end of the lightning protection system, respectively.

The Second Embodiment

As shown in Fig.2, the outdoor lightning protection power supply system according to the invention includes an AC distribution plant 6, an AC/DC rectifier 2, a backup battery 4 and a DC distribution plant 7, wherein the circuit breaker F1 and F2 of the AC input, the lightning protection system, the EMI (Electro Magnetic Interference) filter 11 of the AC input and the system main earthing bar 12 are integrated in a single electromagnetic shielding electrical box 1, which functions as the interface between the AC/DC rectifier 2 and the AC incoming line inside the power supply system in order to achieve the function of system lightning protection, AC EMI filtering and system earthing.

The EMI filter 11 is used for the input terminal of the AC distribution plant 6 in order to absorb the conducted interference of the AC load, thereby reducing the pollution of the entire system to the supply network.

The electrical box 1 provides the isolation between the AC incoming line and the backend apparatus in one aspect, and is used to achieve EMC shielding in another aspect. The main earthing bar 12 is disposed in the electrical box 1 and formed in integral with the electrical box to ensure a good electromagnetic shielding. The output of the electrical box 1 is used as the input of the AC distribution plant, which is connected to the AC/DC rectifier 2 and other AC loads 3. At this stage of the AC/DC rectifier 2, the AC safety ground and the DC earthing are connected together to achieve a two-line system, thereby reducing the system cost. The output of the AC/DC rectifier 2 is connected in parallel with the backup battery 4 as the input to the DC distribution plant 7 to supply power to the tele-communication apparatus 5.

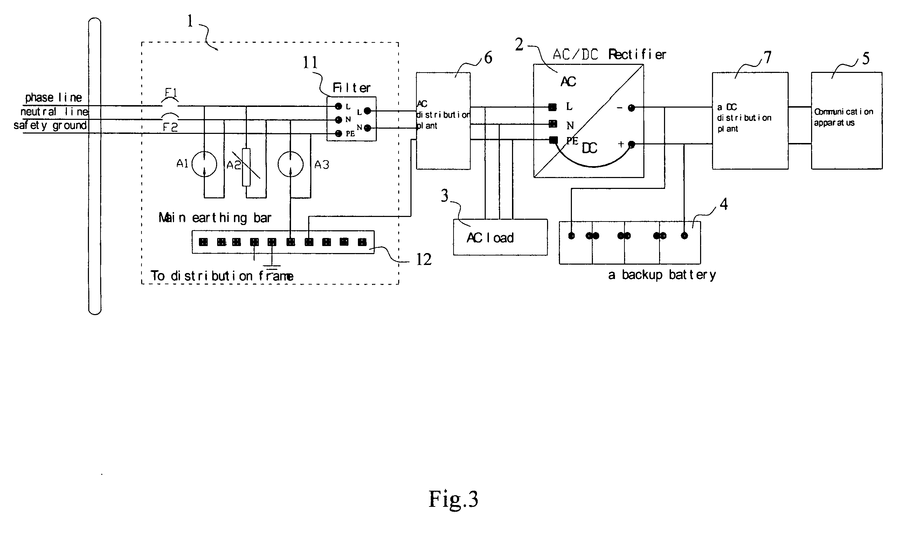

In the embodiment shown in Fig. 3, the lightning protection function of the system is achieved mainly by the electrical box. There are three lightning protection modules, i.e. A1, A2 and A3 in the electrical box, wherein A1 and A2 are connected in parallel between the phase line and the neutral line, and A3 is connected in parallel between the neutral line and the safety ground. With the three lightning protection module, the system is allowed to achieve the protection level of I + II. A1 and A2 are level I and level II respectively. With Transient Absorbtion Technology, these two lightning protection modules can be mounted together directly to form level I + II lightning protection of the lightning protection system without the need of an additional decoupling circuit, thereby reducing the system volume.

F1 and F2 are circuit breakers, which are used to disconnect the system from the mains power supply in the event that the backend apparatus is short circuited.

In summary, the invention adds a lightning protection system only before the mains power supply entering the tele-communication apparatus. With the use of the lightning protection modules with large discharge current and low residual voltage, it eliminates the need of the additional lightning arresters for its backend apparatus. High reliability can be achieved only via the MOV that the apparatus itself is provided with. Since the number of the lightning protection module is significantly reduced, the system cost is reduced and the available space of the outdoor communication cabinet is saved.

The embodiments described above are only for the purpose of the explanation of the invention, and is not the limitation to the invention. The skilled in the related art can make various permutations and alternations to the invention without departing from its spirit and scope. Thus, all the equivalents fall within the scope of the invention, which should be defined by the following claims.

## Claims

1. An outdoor lightning protection power supply system connected between the mains power supply and a communication apparatus, comprising an AC distribution plant, an AC/DC rectifier and a backup battery, wherein a lightning protection system and a main earthing bar connected with the lightning protection system is disposed at the input terminal of the AC distribution plant.

2. The outdoor lightning protection power supply system according to claim 1, wherein there is further provided a filter connected respectively with the lightning protection system and the main earthing bar for absorbing AC load conducted interference.

3. The outdoor lightning protection power supply system according to claim 1 or 2, wherein there is further provided an electrical box for accommodating the lightning protection system and the main earthing bar, or accommodating the lightning protection system, the main earthing bar and the filter.

4. The outdoor lightning protection power supply system according to claim 1, 2 or 3, wherein the lightning protection system utilizes a lightning protection mode with large discharge capacity and low residual voltage composed of a number of lightning protection modules.

5. The outdoor lightning protection power supply system according to claim 4, wherein the lightning protection system comprises three, the first, the second and the third lightning protection modules (A1, A2 and A3) connected to a single-phase power supply respectively, wherein the first and the second lightning protection modules (A1, A2) are connected in parallel between the phase line and the neutral line of the single-phase power supply, and the third lightning protection module (A3) is connected in parallel between the neutral line and the safety ground of the single-phase power supply.

6. The outdoor lightning protection power supply system according to claim 5, wherein the lightning protection level of the first and the second lightning protection modules (A1 and A2) are level I and level II respectively, which forms level I + II lightning protection of the lightning protection system.

7. The outdoor lightning protection communication power supply system according to claim 6, wherein the level I + II lightning protection employs lightning protection modules with Transient Absorbtion Technology.

8. The outdoor lightning protection power supply system according to claim 1 or 2, wherein two circuit breakers (F1, F2) are connected to the phase line and the neutral line of single-phase power supply at the front end of the lightning protection system.

9. The outdoor lightning protection power supply system according to claim 3, wherein two circuit breakers (F1, F2) are further connected to the phase line and the neutral line of the single-phase power supply at the front end of the lightning protection in the electrical box.

10. The outdoor lightning protection power supply system according to claim 1 or 2, wherein an AC safety ground and a DC earthing is connected in the AC/DC rectifier.

11. The outdoor lightning protection power supply system according to claim 3, wherein an AC safety ground and a DC earthing is connected in the AC/DC rectifier.

12. The outdoor lightning protection power supply system according to claim 3, wherein the electrical box is an electrical box with electromagnetic shielding function.

13. The outdoor lightning protection power supply system according to claim 3, wherein the first and the third lightning protection modules (A1 and A3) are lightning protection modules of the voltage switching type, and the second lightning protection module (A2) is a lightning protection module of the voltage limiting type.
